# EUROPEAN PATENT SPECIFICATION

(11) **EP 3 186 197 B1**
(45) Date of publication and mention of the grant of the patent: **12.12.2018**
(21) Application number: 15754254.9
(22) Date of filing: 27.07.2015
(51) Int. Cl.: C02F 1/463, C02F 1/465

(54) **SYSTEM AND METHOD FOR WASTE WATER PURIFICATION**
SYSTEM UND VERFAHREN ZUR ABWASSERREINIGUNG
SYSTÈME ET PROCÉDÉ DE PURIFICATION DES EAUX USÉES

(30) Priority: 31.07.2014 FI 20145700
(43) Date of publication of application: 05.07.2017
(73) Proprietor: Kemppainen, Risto, 34150 Kyrönlahti (FI)
(72) Inventor: Kemppainen, Risto, 34150 Kyrönlahti (FI)
(74) Representative: Kolster Oy Ab
(86) International application number: PCT/FI2015/050511
(87) International publication number: WO 2016/016511

(56) References cited:
- WO-A1-2012/151617
- CN-A- 102 398 963
- US-A- 3 543 936

## Description

### Background of the invention

The invention relates to waste water purification and particularly to waste water purification by electroflotation on an industrial scale.

Industry, agriculture and landfills produce large quantities of process water including a considerable amount of impurities dissolved in water.

European Patent 1583719 discloses a method and apparatus for removing impurities from waste water by electroflotation. The waste water to be cleaned is passed through an electrolytic cell, which consists of tubular, vertical electrodes in the form of a tower. Electrolysis is performed between two electrodes of different electronegativities such that the more electronegative electrode, which is non-wearing in a cleaning process, is used for producing hydrogen gas and hydroxyl ions from water. The less electronegative electrode, which is an active, wearing electrode in a cleaning process, is used for producing metal ions in a solution to be cleaned. In addition to this basic reaction, a desired oxidation-reduction reaction is effected in the cell, in a strictly controlled electric field, for removing one or more designated impurities from the cleaned water.

A problem with the arrangement described above is that the system is complex and cannot be scaled to large amounts of waste water. For large amounts of waste water, a plurality of above-described cells, i.e. tubular towers, all requiring auxiliary devices, such as pumps, need to be built.

Further examples of known methods and apparatuses for removing impurities from waste water are described in publications WO2012/151617, CN102398963 and US3543936.

### Brief description of the invention

It is thus an object of the invention to provide a method and a system implementing the method so as to enable the above-mentioned problems to be solved. The object of the invention is achieved by a method and system which are characterized by what is disclosed in the independent claims. Preferred embodiments of the invention are disclosed in the dependent claims.

The invention is based on providing a flow channel, in which waste water flows by means of gravity. On the bottom of the flow channel there are lamellae with a large effective area, in which lamellae electrolysis necessary for electroflotation happens, and when water flows along the flow channel, impurities are lifted by electroflotation to the surface as a flock and clean water flows along the bottom of the flow channel. At the end of the flow channel the clean water and the flock are separate from each other and form a distinct boundary, and the clean water is removed from the flow channel.

Advantages of the method and system of the invention are simplicity and scalability of the system. Waste water can flow in the flow channel by means of Earth's gravity, and large pumps are not necessarily needed. In practice, the system may be scaled infinitely by increasing the size of the lamellae used and the effective area thereof.

### Brief description of the figures

The invention will now be described in more detail in connection with the preferred embodiments and with reference to the accompanying drawings, in which:
Figure 1 is a top view of a flow channel and pipes leading thereto;
Figure 2 is a side view of the flow channel and the pipes leading thereto; and
Figure 3 shows formation of flock in the flow channel.

### Detailed description of the invention

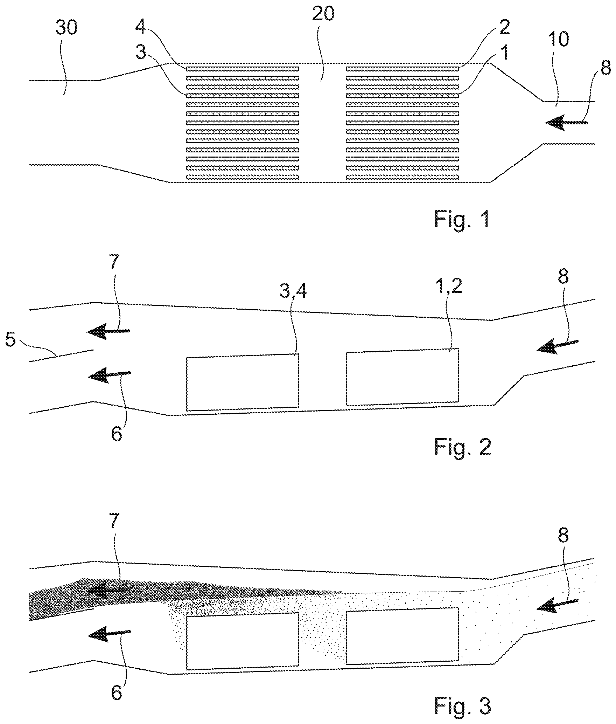

With reference to Figure 1, a flow channel 20 is provided with a supply pipe 10, through which waste water or process water 8 to be cleaned is led into the flow channel, and an outlet pipe 30, through which the formed flock 7 and clean water 6 are removed from the flow channel. The diameter of the flow channel 20 is preferably larger than that of the supply pipe 10 leading thereto, wherefore the flow rate of the process water decreases when the water arrives in the flow channel. The slower the process water flows in the flow channel, the shorter the flow channel may be built in the flow direction in order that impurities have enough time to move as a flock to the surface of the clean water in the flow channel.

Removal of impurities and formation of flock on the water surface in the flow channel occur in a prior art electroflotation process, which is described in European Patent 1583719, for example. The electrode provided with an iron electrode 1 generates iron hydroxide and the electrode provided with an aluminium electrode 3 generates aluminium hydroxide and aluminium sulphate. The process water to be cleaned and the reaction products formed in the electrodes are led into the outlet pipe, and hydrogen released in the electrolysis is used for lifting the precipitate, i.e. the flock, consisting of iron hydroxide, aluminium hydroxide and aluminium sulphate to the surface of the water.

Figure 2 shows, in accordance with an embodiment, a side profile of the flow channel and supply and outlet pipes leading thereto. The method and system of the invention utilize a substantially horizontal flow channel, the bottom part of which has electrolysis elements consisting of lamellae, which provide a large effective area for electrolysis. The substantially horizontal flow channel 20 may, for example, rise or descend in the flow direction at an angle of less than 5°, less than 10° or less than 15° on average. The process water to be cleaned either flows freely in the flow channel made of an electrically insulating material, the process water may flow thereto along a pipe, or it is fed by a pump into the flow channel.

An iron lamella element 1, 2 is located first in the flow direction, and an aluminium lamella element 3, 4 is located next, whereby the elements are isolated from one another and electric current passing through each element is adjusted separately. The lamella elements are connected to separate power sources, which are controlled separately. Between the iron lamellae 1 in the iron lamella element there are negative lamellae 2, which may be made of a different material than positive iron lamellae. Accordingly, between the aluminium lamellae 3 in the aluminium lamella element there are negative lamellae 4, which may be made of a different material than positive aluminium lamellae. What is essential is that the negative lamella 2, 4 is more electronegative than the positive lamella 1, 3, which may be an aluminium or iron lamella, for example. The negative lamella may be made of stainless steel, nickel, chrome, platinum or noble metal alloys, whose difference in electronegativity compared to the positive lamella is large. The poles of the power sources are connected to the upper parts of the lamellae at intervals of approximately 500 mm, for example.

The aqueous solution to be cleaned is led through the lamellae 1 to 4 and the currents of the elements are regulated in such a manner that the lamella element provided with iron lamellae generates iron hydroxide and the lamella element provided with aluminium lamellae generates aluminium hydroxide and aluminium sulphate. A suitable current depends on the aqueous solution to be cleaned, which means that typically the current must always be regulated when the composition of the aqueous solution to be cleaned changes notably.

Iron hydroxide produced in the lamella element provided with iron lamellae 1 forms a molecular network acting as a molecular sieve, which is denser than the molecular network formed by aluminium hydroxide. The precipitate formed by the iron and aluminium hydroxides can bind the tiny hydrogen bubbles produced in the reactions well and, at the same time, it also binds the aluminium sulphate to the flock being formed, which is lifted by the hydrogen bubbles produced on the negative lamellae up towards the surface of the water. The specific weight of the flock consisting of the formed precipitate and the hydrogen bubbles is slightly smaller than the specific weight of water, and thus the flock 7 rises upwards more rapidly than the water flow.

The aluminium lamella element 3, 4 is located last in the flow direction. The use of an aluminium lamella element is advantageous, because it removes the dissolved residual iron from the aqueous solution to be cleaned. An iron ion Fe3 produced in the iron lamella element 1, 2 is sufficiently large to be caught in the aluminium hydroxide network formed in the aluminium lamella element.

The aqueous solution to be cleaned and the reaction products that have been formed in the lamella elements in the above-described manner and have precipitated to solids are led to a rising conduit at the end of the flow channel, where they rise by means of the hydrogen released in the electrolysis as a flock 7 that accumulates on the surface of the clean water 6.

In an embodiment, the flock is separated from water by an adjustable dividing plate 5 located at the boundary of the water 6 and the flock 7. The flock is led to its own container or back to the process, if necessary and possible, and the clean water is led to its own container or back to the process. The moisture content of the flock is adjusted by the length of the rising conduit. The distance between the last element and the outlet pipe for flock depends on the amount of impurities in the waste water being treated.

In an embodiment, at the beginning of the outlet pipe there is a filter at its bottom part, from which extra water, if any, flows into the outlet pipe for clean water. The percentage of moisture in the flock is preferably so large that the flock flows to its own tank by itself.

With the method and system described, even large amounts of waste water flows can be purified. The number, length or width of the lamella elements may be increased from case to case.

In an embodiment, the thickness of the iron and aluminium lamellae is 10 to 30 mm. In an embodiment, the thickness of a negative lamella is 2 to 5 mm.

The current and voltage values of the lamella elements, by which the desired reactions are accomplished, depend on various properties of the solution, such as conductance, flow rate and electronegativity between the components of the solution and the anode. The conductance of the solution may be adjusted by additives, and the flow rate may be adjusted as desired. Because the solution participates in the reaction, its conductance changes during the reaction.

For the above-mentioned reasons, optimal current and voltage values for each application must be found experimentally. In an embodiment, the typical current values are 20 to 100 A and the voltage values 20 to 100 V.

The above horizontal method and system based on lamellae are designed for purifying large amounts of waste water flows, whereby the capacity (litres per hour) is considerably greater than in prior art apparatuses using an electrolytic cell, which is a tower consisting of vertical, tubular electrodes. In addition, electricity consumption, manufacturing costs as well as servicing and operating costs are smaller than in prior art arrangements.

It is obvious to a person skilled in the art that as technology advances, the basic idea of the invention may be implemented in many different ways. The invention and its embodiments are thus not restricted to the above-described examples but may vary within the scope of the claims.

## Claims

1. A method for removing impurities from an aqueous solution, **characterized by** comprising:
- leading the aqueous solution (8) to be cleaned into a substantially horizontal flow channel (20), through which the aqueous solution to be cleaned flows,
- applying electric current to an iron lamella element (1, 2) located at the bottom part of the flow channel and earlier in the flow direction to produce iron hydroxide and hydrogen,
- applying electric current to an aluminium lamella element (3, 4) located at the bottom part of the flow channel and later in the flow direction to produce aluminium hydroxide, aluminium sulphate and hydrogen,
- separating a precipitate, i.e. a flock (7), containing the impurities and having risen to the surface by means of molecular networks formed by molecules produced in said lamella elements and buoyancy caused by the hydrogen, from cleaned water (6), and
- leading the clean water (6) from the bottom of the flow channel to its own outlet pipe,
wherein the bottom of the flow channel is descending, so that at the supply end for water to be cleaned, the bottom is located higher than at the outlet end for cleaned water, and the water to be cleaned flows through the flow channel by means of gravity.

2. A method as claimed in claim 1, **characterized by** further leading the flock (7) and a small amount of the cleaned water from the upper part of the flow channel to its own outlet pipe.

3. A method as claimed in claim 2, **characterized by** further filtering cleaned water from the bottom part of the outlet pipe for flock to the outlet pipe for cleaned water.

4. A method as claimed in any one of the preceding claims, **characterized in that** the bottom of the flow channel is horizontal, so that at the supply end for water to be cleaned, the bottom is substantially on the same plane as at the outlet end for cleaned water.

5. A method as claimed in any one of the preceding claims, **characterized in that** said lamella elements consist of lamellae, i.e. plates in the flow direction of water to be cleaned and comprising metal.

6. A system for removing impurities from an aqueous solution, the system comprising a supply channel (10) for an aqueous solution to be cleaned, an outlet channel (30) for cleaned water, and electrolysis elements (1 to 4) therebetween for producing a molecular network and hydrogen, which are used for lifting the impurities from water (6) to be cleaned to its surface as a flock (7), **characterized in that** said electrolysis elements are located at the bottom part of a substantially horizontal flow channel (20) and that said electrolysis elements comprise lamellae, wherein the electrolysis elements comprise an iron lamella element (1, 2) located earlier in the flow direction to produce iron hydroxide and hydrogen, and an aluminium lamella element (3, 4) located later in the flow direction to produce aluminium hydroxide, aluminium sulphate and hydrogen, and
the bottom of the flow channel (20) is descending, so that at the supply end for water to be cleaned, the bottom is located higher than at the outlet end for cleaned water, and the water to be cleaned flows through the flow channel by means of gravity.

7. A system as claimed in claim 6, **characterized in that** it comprises an iron lamella element acting as an electrolysis element, in which, between positive iron lamellae (1), there are negative lamellae (2), which are more electronegative than the positive iron lamella elements (1).

8. A system as claimed in claim 6 or 7, **characterized in that** it comprises an aluminium lamella element acting as an electrolysis element, in which, between positive aluminium lamellae (3), there are negative lamellae (4), which are more electronegative than the positive aluminium lamella elements (3).

## Patentansprüche

1. Verfahren zum Entfernen von Verunreinigungen aus einer wässrigen Lösung, **dadurch gekennzeichnet, dass** es umfasst:
- Leiten der zu reinigenden wässrigen Lösung (8) in einen im Wesentlichen horizontalen Strömungskanal (20), durch den die zu reinigende wässrige Lösung strömt,
- Anlegen von elektrischem Strom an ein Lamellen-Element (1, 2) aus Eisen, das sich an dem Bodenteil des Strömungskanals und in der Strömungsrichtung vorn befindet, um Eisenhydroxid und Wasserstoff zu erzeugen,
- Anlegen von elektrischem Strom an ein Lamellen-Element (3, 4) aus Aluminium, das sich an dem Bodenteil des Strömungskanals und in der Strömungsrichtung hinten befindet, um Aluminiumhydroxid, Aluminiumsulfat und Wasserstoff zu erzeugen,
- Abscheiden eines Niederschlags, d. h. eines Flöckchens (7), das die Verunreinigungen enthält und an die Oberfläche gestiegen ist, mittels molekularer Netzwerke, die aus in den Lamellen-Elementen erzeugten Molekülen bestehen, und durch den Wasserstoff verursachtem Auftrieb, aus gereinigtem Wasser (6), sowie
- Leiten des sauberen Wassers (6) von dem Boden des Strömungskanals zu seinem eigenen Auslassrohr,
wobei der Boden des Strömungskanals so abfällt, dass an dem Zuführ-Ende für zu reinigendes Wasser der Boden höher liegt als an dem Auslass-Ende für gereinigtes Wasser, und das zu reinigende Wasser mittels Schwerkraft durch den Strömungskanal strömt.

2. Verfahren nach Anspruch 1, **dadurch gekennzeichnet, dass** des Weiteren das Flöckchen (7) und eine geringe Menge des gereinigten Wassers von dem oberen Teil des Strömungskanals zu seinem eigenen Auslassrohr geleitet werden.

3. Verfahren nach Anspruch 2, **dadurch gekennzeichnet, dass** des Weiteren gereinigtes Wasser von dem Bodenteil des Auslass-Rohrs für Flöckchen zu dem Auslassrohr für gereinigtes Wasser gefiltert wird.

4. Verfahren nach einem der vorangehenden Ansprüche, **dadurch gekennzeichnet, dass** der Boden des Strömungskanals horizontal ist, so dass an dem Zuführ-Ende für zu reinigendes Wasser der Boden im Wesentlichen in der gleichen Ebene liegt wie das Auslass-Ende für gereinigtes Wasser.

5. Verfahren nach einem der vorangehenden Ansprüche, **dadurch gekennzeichnet, dass** die Lamellen-Elemente aus mehreren Lamellen, d. h. Platten in der Strömungsrichtung des zu reinigenden Wassers, bestehen und Metall umfassen.

6. System zum Entfernen von Verunreinigungen aus einer wässrigen Lösung, wobei das System einen Zuführ-Kanal (10) für zu reinigende wässrige Lösung, einen Auslass-Kanal (30) für gereinigtes Wasser sowie Elektrolyse-Elemente (1 bis 4) zwischen ihnen umfasst, mit denen ein molekulares Netzwerk und Wasserstoff erzeugt werden, die dazu dienen, die Verunreinigungen aus dem zu reinigenden Wasser (6) als ein Flöckchen (7) an seine Oberfläche zu heben, **dadurch gekennzeichnet, dass** sich die Elektrolyse-Elemente an dem Bodenteil eines im Wesentlichen horizontalen Strömungskanals (20) befinden und die Elektrolyse-Elemente ein Lamellen-Element (1, 2) aus Eisen, das sich in der Strömungsrichtung vorn befindet und Eisenhydroxid sowie Wasserstoff erzeugt, und ein Lamellen-Element (3, 4) aus Aluminium umfassen, das sich in der Strömungsrichtung hinten befindet und Aluminiumhydroxid, Aluminiumsulfat sowie Wasserstoff erzeugt, und
der Boden des Strömungskanals (20) so abfällt, dass an dem Zuführ-Ende für zu reinigendes Wasser der Boden höher liegt als an dem Auslass-Ende für gereinigtes Wasser, und das zu reinigende Wasser mittels Schwerkraft durch den Strömungskanal strömt.

7. System nach Anspruch 6, **dadurch gekennzeichnet, dass** es ein Lamellen-Element aus Eisen umfasst, das als ein Elektrolyse-Element wirkt, wobei sich zwischen positiven Lamellen (1) aus Eisen negative Lamellen (2) befinden, die stärker elektronegativ sind als die positiven Lamellen-Elemente (1) aus Eisen.

8. System nach Anspruch 6 oder 7, **dadurch gekennzeichnet, dass** es ein Lamellen-Element aus Aluminium umfasst, das als ein Elektrolyse-Element wirkt, wobei sich zwischen positiven Lamellen (3) aus Aluminium negative Lamellen (4) befinden, die stärker elektronegativ sind als die positiven Lamellen-Elemente (3) aus Aluminium.

## Revendications

1. Procédé d'élimination d'impuretés d'une solution aqueuse, **caractérisé en ce qu'**il comprend :
- l'action d'amener la solution aqueuse (8) à purifier dans un canal d'écoulement (20) sensiblement horizontal, à travers lequel la solution aqueuse à purifier s'écoule,
- l'application d'un courant électrique à un élément à lamelles en fer (1, 2) situé au niveau de la partie de fond du canal d'écoulement et au début dans le sens de l'écoulement afin de produire de l'hydroxyde de fer et de l'hydrogène,
- l'application d'un courant électrique à un élément à lamelles en aluminium (3, 4) situé au niveau de la partie de fond du canal d'écoulement et plus loin dans le sens de l'écoulement afin de produire de l'hydroxyde d'aluminium, du sulfate d'aluminium et de l'hydrogène,
- la séparation d'un précipité, c'est-à-dire d'un floc (7), contenant les impuretés et étant remonté à la surface au moyen de réseaux moléculaires formés par les molécules produites dans lesdits éléments à lamelles et de la poussée due à l'hydrogène, de l'eau purifiée (6), et
- l'action d'amener l'eau purifiée (6) depuis le fond du canal d'écoulement vers un tuyau de sortie dédié,
le fond du canal d'écoulement étant en pente descendante, de sorte qu'au niveau de l'extrémité d'alimentation en eau à purifier, le fond se trouve plus haut qu'au niveau de l'extrémité de sortie de l'eau purifiée, et l'eau à purifier s'écoule à travers le canal d'écoulement sous l'effet de la pesanteur.

2. Procédé ainsi que revendiqué dans la revendication 1, **caractérisé par** la conduction, en outre, du floc (7) et d'une petite quantité de l'eau purifiée depuis la partie supérieure du canal d'écoulement vers un tuyau de sortie dédié.

3. Procédé ainsi que revendiqué dans la revendication 2, **caractérisé par** le filtrage, en outre, de l'eau purifiée provenant de la partie de fond du tuyau de sortie du floc vers le tuyau de sortie de l'eau purifiée.

4. Procédé ainsi que revendiqué dans l'une quelconque des revendications précédentes, **caractérisé en ce que** le font du canal d'écoulement est horizontal, de sorte qu'au niveau de l'extrémité d'alimentation en eau à purifier, le fond est sensiblement sur le même plan qu'au niveau de l'extrémité de sortie de l'eau purifiée.

5. Procédé ainsi que revendiqué dans l'une quelconque des revendications précédentes, **caractérisé en ce que** lesdits éléments à lamelles sont constitués de lamelles, c'est-à-dire de plaques dans le sens d'écoulement de l'eau à purifier et comprenant du métal.

6. Système d'élimination d'impuretés d'une solution aqueuse, le système comprenant un canal d'alimentation (10) pour une solution aqueuse à purifier, un canal de sortie (30) pour l'eau purifiée et des éléments d'électrolyse (1 à 4) entre ceux-ci pour produire un réseau moléculaire et de l'hydrogène, lesquels sont utilisés pour faire remonter les impuretés de l'eau à purifier (6) jusqu'à sa surface sous forme de floc (7), **caractérisé en ce que** lesdits éléments d'électrolyse sont situés au niveau de la partie de fond d'un canal d'écoulement (20) sensiblement horizontal et **en ce que** lesdits éléments d'électrolyse comprennent des lamelles, les éléments d'électrolyse comprenant un élément à lamelles en fer (1, 2) situé au début dans le sens de l'écoulement afin de produire de l'hydroxyde de fer et de l'hydrogène, et un élément à lamelles en aluminium (3, 4) situé plus loin dans le sens de l'écoulement afin de produire de l'hydroxyde d'aluminium, du sulfate d'aluminium et de l'hydrogène, et
le fond du canal d'écoulement (20) est en pente descendante, de sorte qu'au niveau de l'extrémité d'alimentation en eau à purifier, le fond se trouve plus haut qu'au niveau de l'extrémité de sortie de l'eau purifiée, et l'eau à purifier s'écoule à travers le canal d'écoulement sous l'effet de la pesanteur.

7. Système ainsi que revendiqué dans la revendication 6, **caractérisé en ce qu'**il comprend un élément à lamelles en fer agissant comme élément d'électrolyse, dans lequel, entre des lamelles en fer positives (1), se trouvent des lamelles négatives (2), qui sont plus électronégatives que les éléments à lamelles en fer positives (1).

8. Système ainsi que revendiqué dans la revendication 6 ou 7, **caractérisé en ce qu'**il comprend un élément à lamelles en aluminium agissant comme élément d'électrolyse, dans lequel, entre des lamelles en aluminium positives (3), se trouvent des lamelles négatives (4), qui sont plus électronégatives que les éléments à lamelles en aluminium positives (3).
